# EUROPEAN PATENT SPECIFICATION

(11) **EP 0 566 389 B1**
(45) Date of publication and mention of the grant of the patent: **21.06.2000**
(21) Application number: 93302900.1
(22) Date of filing: 14.04.1993
(51) Int. Cl.: H04B 10/16

(54) **Optical amplification repeating transmission system**
Übertragungssystem mit optischen Zwischenverstärkern
Système de transmission avec répéteurs à amplification optique

(30) Priority: 17.04.1992 JP 9819592
(43) Date of publication of application: 20.10.1993
(73) Proprietor: KOKUSAI DENSHIN DENWA CO., LTD, Shinjuku-ku Tokyo 163 (JP)
(72) Inventor: Akiba, Shigeyuki, Nerima-ku, Tokyo (JP); Yamamoto, Shu, Shiki-shi, Saitama-ken (JP); Wakabayashi, Hiroharu, Tama-ku, Kawasaki-shi, Kanagawa-ken (JP); Edagawa, Noboru, Shinjuku-ku, Tokyo (JP); Taga, Hidenori, Sakado-shi, Saitama-ken (JP); Yoshida, Yoshihiro, Oomiya-shi, Saitama-ken (JP); Namihira, Yoshinori, Hachiouji-shi, Tokyo (JP); Kawazawa, Toshio, Shinjuku-ku, Tokyo (JP)
(74) Representative: Carter, Gerald

(56) References cited:
- EP-A- 0 412 717
- ELECTRONICS LETTERS. vol. 26, no. 22, 25 October 1990, STEVENAGE GB pages 1913 - 1914 M.SUMIDA 'Polarisation Insensitive Configuration of Semiconductor Laser Amplifier'
- PATENT ABSTRACTS OF JAPAN vol. 13, no. 270 (E-776)21 June 1989 & JP-A-1 061 079 ( NEC )
- PATENT ABSTRACTS OF JAPAN vol. 15, no. 287 (P-1229)22 July 1991 & JP-A-3 098 025 ( TOSHIBA )
- ELECTRONICS LETTERS. vol. 28, no. 2, 16 January 1992, STEVENAGE GB pages 196 - 199 B.F.JORGENSEN ET AL 'Optical Amplifier Dynamic Range Improvement with All-Fibre Optical Image -Rejection Mixer in 2.5 Gbit/s CP-FSK System Experiment'

## Description

### BACKGROUND OF THE INVENTION

The present invention relates to a transmission system made of optical fibers, and more particularly relates to an optical amplification repeating transmission system in which an optical signal is transmitted through the repetitive direct optical amplification.

An optical amplification repeating transmission system has large advantages that the constitution of the repeater thereof is simplified and the number of the components of the repeater is reduced, because the system does not need the conversion of an electric and an optical signals into each other, the complicated regenerative processing in an electric section and the providing of a very fast processing electronic circuit, which are needed by a regenerative repeating system. For that reason, the former system is regarded as a promising long-distance optical transmission system for the next generation. In the system, optical transmission terminal stations are usually opposed to each other as sending and receiving terminals so that the optical signal is repeated and transmitted between the stations. The optical signal with almost no distortion or noise is sent out from one of the stations, and attenuated while being propagated in an optical fiber as a transmission line. The attenuated optical signal is amplified by the optical amplification repeater directly, namely, without being converted into the electric signal in advance. The amplified optical signal is sent out from the repeater into a next optical fiber as a transmission line.

One known form of device for directly amplifying an attenuated optical signal in such a transmission system comprises a semi-conductor laser amplifier. A system using this type of optical amplifier is described in EP0412717. However, a disadvantage of using a semiconductor laser amplifier in an optical repeating system is that the amplification of such an amplifier is normally dependent on the state of polarization of the optical signal which is input into the amplifier. This characteristic of semiconductor laser amplifiers initially limited the utilisation of such amplifiers in optical communication systems. Accordingly, EP0412717 describes a system for reducing the dependence of the amplification gain of a semiconductor laser amplifier on the state of polarization of the optical signal. A configuration of a semiconductor laser amplifier of reduced polarization sensitivity is also described in "Electronic Letters", volume 26 No. 22, 25th October 1990, pages 1913 and 1914 (M. Sumida: "Polarization Insensitive Configuration of Semiconductor Laser Amplifier").

However, the present invention does not relate to optical transmission systems using semiconductor laser amplifiers, but rather to a system which uses an erbium-doped fiber as the amplifying medium. In general, the dependence of the amplification gain of an erbium-doped fiber on the state of polarization of the optical signal is negligible, and accordingly the above mentioned problem arising from semiconductor laser amplifiers is avoided. However, the present inventors have discovered that some of the other components used in combination with the erbium-doped fiber in an optical amplification repeater can have a dependence on the state of polarization of the optical signal, and that this dependence may interfere with the long distance transmission of the optical signal. The present invention sets out to overcome this different problem, as will be described.

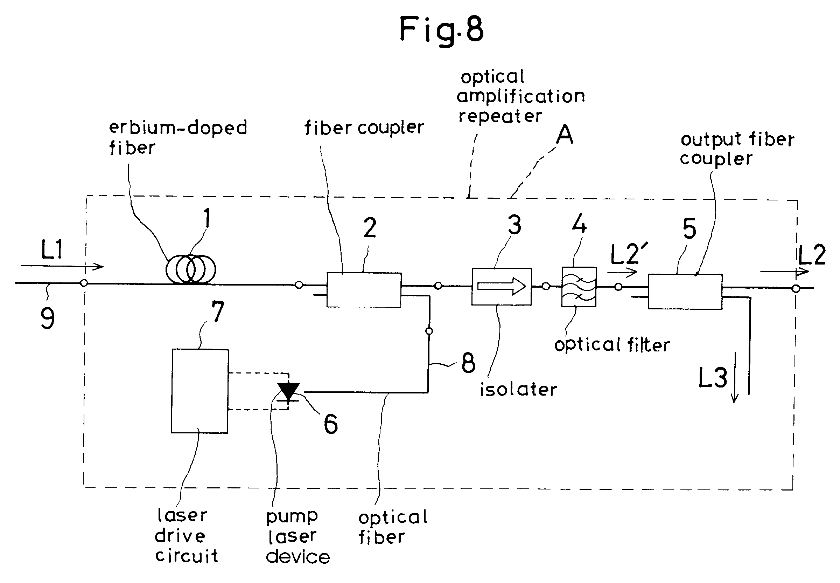

FIG.8 shows an example of the constitution of each optical amplification repeater A of an optical amplification repeating transmission system. The repeater A includes an erbium-doped fiber 1, a wavelength division multiplexing (which is hereinafter referred to as the W.D.M.) fiber coupler 2, an isolator 3. an optical filter 4, an output fiber coupler 5, a pump laser device 6, a laser drive circuit 7 for driving the pump laser device 6, and an optical fiber 8 for guiding the pump power from the pump laser device 6. Shown at 9 in FIG.8 is an optical fiber for transmission between the repeater A and the previous one.

The erbium-doped fiber 1 is excited by the pump laser device 6 electrically connected to the laser drive circuit 7. The pump laser device 6 is a high-output semiconductor laser device which is usually an InGaAsP/InP laser device of about 1,475 nm in oscillation wavelength or an InGaAs/GaAs laser device at 980 nm in oscillation wavelength. The output light from the pump laser device 6 is focused into the optical fiber 8, and then introduced into the erbium-doped fiber 1 through the W.D.M. fiber coupler 2. The erbium in the fiber 1 is excited by the pump power so as to amplify light of 1,520 nm to 1,570 nm in wavelength. For example, an input optical signal L1 of 1,558 nm in wavelength is transmitted through the optical fiber 9 in a direction shown by an arrow in FIG. 8, and is then introduced into the erbium-doped fiber 1 in which the signal is amplified. The amplified signal L1 is guided through the coupler 2, the isolator 3 and the filter 4 so that an amplified optical signal L2' can be branched by the output fiber coupler 5 so that a monitoring optical signal L3 is taken out therefrom to be sent back to a sending terminal station. In some cases, the isolator 3, the optical filter 4 and the output fiber coupler 5 may not be provided. The rest of the output optical signal L2' is an output optical signal L2 which is sent out to the next optical fiber 9 as a transmission line.

The erbium-doped fiber 1 not only amplifies the input optical signal L1, but also generates spontaneous emission which has no relationship with the signal but is a noise to the optical amplification repeater A. The output optical signal L2 includes the noise. Since the optical amplification repeating transmission system includes a plurality of optical amplification repeaters A, such noises are accumulated together through the repeaters A. For these reasons, the signal-to-noise ratio (which is hereinafter referred to as the S/N ratio) of the output optical signal L2 is lower than that of the input optical signal L1. Generally speaking, the magnitude of the noise component of an optical signal is 10 logN dB wherein N denotes the number of optical amplification repeaters from which the signal comes out. Therefore, the magnitude increases in proportion to the number of the repeaters. Since the optical signals are attenuated in the optical fibers 9 as transmission lines and amplified by the optical amplification repeaters A while being transmitted from one optical transmission terminal station toward another one in the system, the optical signal received by the latter station has an S/N ratio determined in terms of the accumulated noises. Therefore, the S/N ratio of the signal received by the station is important.

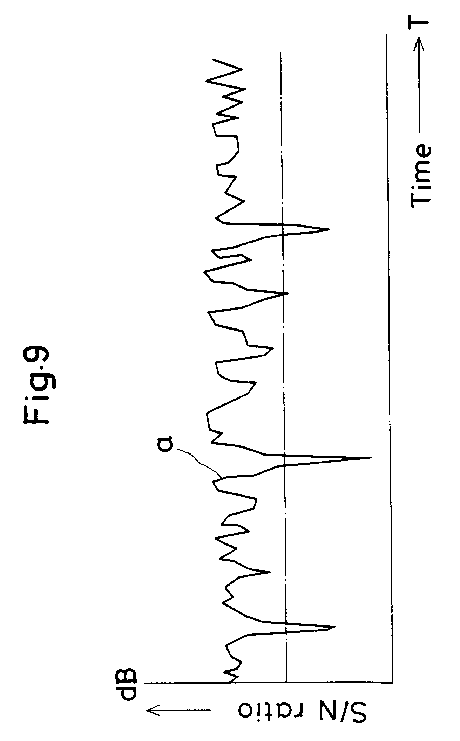

FIG. 9 shows the S/N ratio of an optical signal measured with the lapse of time by the present inventors et al as the signal was transmitted in an optical amplification repeating transmission system actually built by them for an experiment and including a large number of optical amplification repeaters A shown in FIG. 8. To be concrete, 138 optical amplification repeaters A were provided between optical fibers as transmission lines, each of which had a length of about 33 km so that the total length of the system was about 4,500 km. The axis of ordinates in FIG. 9 indicates the S/N ratio of the optical signal received by the optical transmission terminal station of the system through it. The axis of abscissas in FIG. 9 shows the time T, and the total length of the axis corresponds to a time length of about 2 hours. A one-dot chain line shown in the middle of FIG. 9 indicates an S/N ratio necessary to achieve a bit error ratio (which is here in after referred to as the B.E.R.) of 10⁻⁹ bit/sec. The S/N was about 16 dB at a transmission speed of 5 Gbits/sec. in the experiment.

A bent line in FIG. 9 shows the measured S/N ratio of the optical signal for about 2 hours. As understood from FIG. 9, it was found out through the experiment for the first time that the S/N ratio fluctuates with the lapse of time. The fluctuation ranged within about 2 dB during the most of the lapse of time, but went beyond it during the rest of the lapse of time. The B.E.R. was measured along with the measurement of the S/N ratio. As a result, it was found out that almost no bit error occurred when the width of the fluctuation in the S/N ratio was small, but a large number of bit errors occurred and a B.E.R. higher than 10⁻⁹ bit/sec. appeared when the S/N ratio dropped below the level of the one-dot chain line shown in FIG. 9.

Thus, the B.E.R. in the conventional optical amplification repeating transmission system was 10⁻⁹ bit/sec. or less during most of the lapse of time, but the S/N ratio of the optical signal received by the optical transmission terminal station fluctuated so much during the rest of the lapse of the lapse of time that the B.E.R. became more than 10⁻⁹ bit/sec. and the large number of bit errors occurred. This is a problem, because the abrupt occurrence of the bit errors does not meet a world standard which is recommended by Consultative Committee for International Telephone and Telegraph (C.C.I.T.T.) of International Telecommunications Union (I.T.U.), and C.C.I.T.T. says that there shall not be a bit error detected during about 1 hour of transmission at a speed of 5 Gbits/sec.

After detecting the large fluctuation in the S/N ratio of the optical signal at the optical transmission terminal station with the lapse of time, the present inventors et al made in-depth studies to find out the cause of the fluctuation. As a result, they found out that the cause is that the gain of the optical amplification repeater A depends on the state of polarization of the optical signal. In general, the gain of the repeater fluctuates by some quantity ΔG dB due to the state of polarization of the optical signal. The dependence of the amplification gain of the erbium-doped fiber 1 on the state of polarization of the optical signal is negligible, but the dependence of the losses of the signal in the W.D.M. fiber coupler 2, the isolator 3 and the optical filter 4 on the state of polarization of the signal is not negligible but results in causing the gain of the repeater A to fluctuate by the quantity ΔG dB.

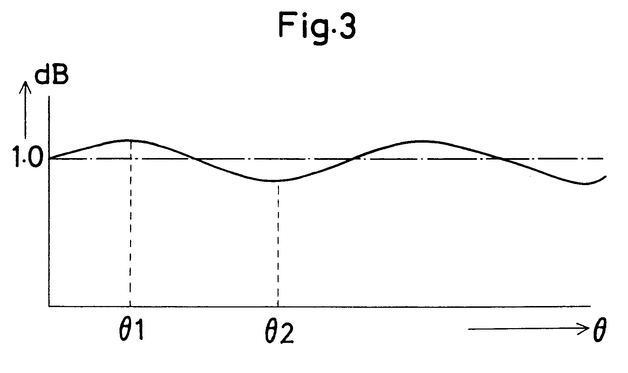

FIG. 3 is a graph showing the dependence of the loss of the optical signal in the optical component of the optical amplification repeater A on the state of polarization of the signal. The axis of abscissas in FIG. 3 indicates the angle θ of the plane of polarization of the optical signal from a reference plane which is a horizontal plane, for example. The total length of the axis of abscissas corresponds to about 360 degrees in angle. The axis of ordinates in FIG. 3 indicates the loss of the signal in the optical component by the unit of dB. A one-dot chain line in FIG. 3 indicates the mean value of the loss, which is 1.0 dB. The loss increases at an angle θ1 and decreases at another angle θ2 so that the loss fluctuates by about 0.3 dB. Since a number of optical components are provided in series in the repeater A, the loss usually fluctuates more complicatedly along with the change in the angle in reality. In the optical amplification repeating transmission system, the magnitude of the optical signal to each optical amplification repeater A is equal to the sum of the original magnitude of the signal and the magnitude of the accumulation of spontaneous emissions which are noises. Since the spontaneous emission is unpolarized light, it is hardly affected by the dependence of the gain of the repeater on the state of polarization of the optical signal. Since the optical signal remains polarized while being transmitted in the system after being sent out from the terminal station thereof, the signal is directly affected by the fluctuation ΔG in the gain of the repeater. Since the state of polarization of the optical signal changes in the optical fiber as a transmission line with the lapse of time, the state of polarization of the optical signal to be put into the repeater from the optical fiber varies irregularly.

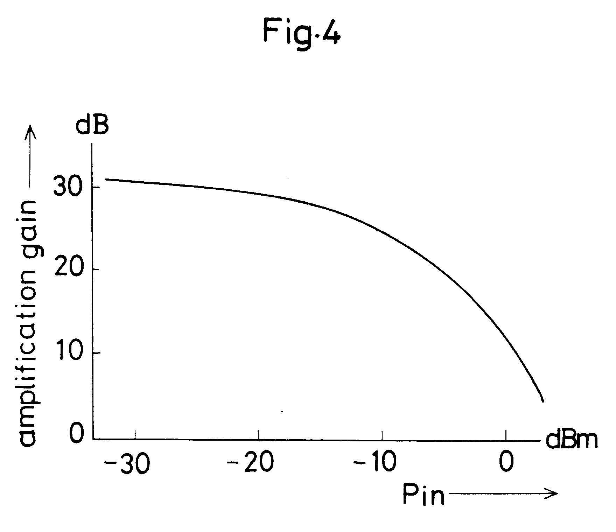

FIG. 4 shows the amplification gain of the erbium-doped fiber 1 of the repeater A. The axis of ordinates in FIG. 4 indicates the amplification gain in dB. The axis of abscissas in FIG. 4 indicates the magnitude Pin (dBm) of the input optical signal to the fiber 1. A curve in FIG.4 indicates the relationship between the gain and the magnitude. It is understood from FIG. 4 that the larger the magnitude Pin of the input optical signal is, the more the amplification gain of the fiber 1 is decreased. When the magnitude Pin is about -15 dBm to about 0 dBm which is the range of the magnitude of the signal in the actually-built long-distance transmission system, the magnitude of the optical signal amplified by the fiber 1 tends to be saturated. This means that the magnitude of the amplified output from the fiber 1 is caused to constantly take a certain value.

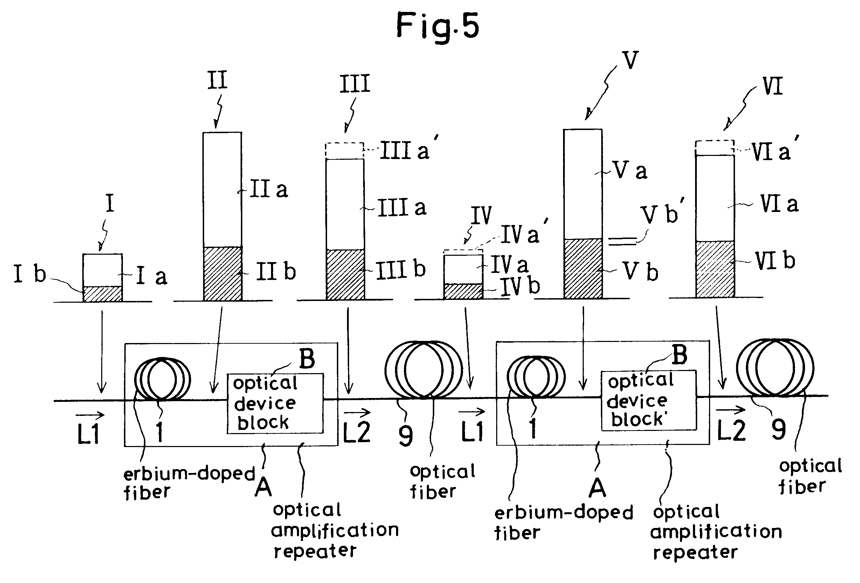

The S/N ratio of the optical signal in the multi-repeating transmission system is described on the basis of the amplified output saturating property of the erbium-doped fiber 1 of the optical amplification repeater A, the dependence of the loss of the signal in the optical component of the repeater on the state of polarization of the signal, the state of polarization of the information component of the input optical signal and the state of polarization of the noise component of the input optical signal, from now on. FIG. 5 shows a process in which the noise components of the optical signals are gradually increased through two pairs of the repeaters A and the optical fibers 9 as transmission lines connected thereto. Shown at B in FIG. 5 is a block including the polarization-dependent optical components 2, 3, 4 and 5 of the repeater A. To simplify the description, the spontaneous emission generated as a noise by the erbium-doped fiber 1 is neglected. Strips I, II, III, IV, V and VI shown in FIG. 5 indicate the ratios between the information and noise components of the optical signals at the portions of the system, which are shown by arrows in FIG. 5. The blank portions of the strips represent the information components of the transmitted signals, while the hatched portions of the strips represent the noise components of the signals. The input optical signal L1 consisting of the information component Ia and the noise component Ib is amplified by the erbium-doped fiber 1 so that the components are changed into the other information component IIa and the other noise component IIb. If the information component IIa undergoes a loss more than the noise component IIb by a quantity IIIa' due to the polarization dependence of the block B next to the fiber 1, the information component and the noise component are changed into the information component IIIa and the noise component IIIb which constitute the output optical signal L2. Since the information component IIIa and noise component IIIb of the output optical signal L2 undergo the same attenuation in the optical fiber 9 as a transmission line next to the block B, the signal is changed into the other input optical signal L1 consisting of the information component IVa and the noise component IVb. The noise components Ib and IVb of the input optical signals L1 are nearly equal to each other, but the information component IVa is smaller than the information component Ia by a quantity IVa'.

If the information component is thus decreased by a quantity ΔG in the anterior optical amplification repeater A due to the polarization dependence thereof, the magnitude of the input optical signal to the erbium-doped fiber 1 is reduced by the quantity of the decrease so that the information component and noise component of the signal receive larger gains, as described above with reference to FIG. 4. For that reason, the magnitude of the noise component Vb of the optical signal V amplified by the posterior optical amplification repeater A is increased by a quantity Vb' so that the magnitude of the information component Va of the signal is reduced in contrast with the case that the magnitude of the information component of the optical signal is not reduced in the anterior repeater A.

If the optical signal V is affected by the polarization dependence of the block B of the anterior amplification repeater A, the information component of the signal is decreased further by a quantity VIa' so that the S/N ratio of the signal is deteriorated. Since the states of polarization of the input optical signals change irregularly in the long-distance multi-stage optical amplification repeating transmission system, the magnitudes of the noise components of the signals are gradually increased at a time point so that the S/N ratios of the output optical signals are increasingly deteriorated. At the time point, the S/N ratio of the output optical signal received by the optical transmission terminal station of the system is lower than a prescribed value so that normal transmission is impossible, and the bit error ratio cannot be kept at 10⁻⁹ bit/sec. or less. Since the states of polarization of the optical signals in the optical fibers 9 change irregularly, the probability that the states of polarization of the input optical signals to the large number of optical amplification repeaters A coincide with each other in such a direction as to simultaneously decrease the magnitudes of the information components of the signals in the repeaters is low. However, the larger the fluctuations ΔG in the gains of the repeaters due to the polarization dependence thereof are, the higher the probability is. At the time of the coincidence, the S/N ratio of the signal becomes lower than the level of the one-dot chain line shown in FIG. 9. The gain of each of the repeaters A varied by 0.2 dB to 0.6 dB depending on the difference in the angle of the plane of polarization of the input optical signal to the repeater, and the mean gain variation of all of the repeaters was about 0.25dB, in the experiment.

Such high dependence of the gain of the repeater A on the state of polarization of the optical signal is much based on the dependence of the optical components of the repeater on the state of polarization of the signal. As for the repeater constitution shown in FIG. 8, the high dependence is chiefly based on the dependence of the W.D.M. fiber coupler 2, the isolator 3, the optical filter 4 and the output fiber coupler 5 on the state of polarization of the signal. The angle of the plane of polarization of the input optical signal to the repeater A changes due to even a small change in the temperature of the optical fiber upstream of the repeater, the vibration of the fiber or the like. In other words, the angle of the plane usually changes with the lapse of time so that if the polarization dependence of the gain of the repeater A to the information component of the optical signal is 0.5 dB, the gain is likely to become 7.5 dB at a time point and drop to 7.0 dB at another time point. Since the angles of the planes of polarization of the input optical signals L1 to the repeaters A change independently of each other, the S/N ratio of the signal received by the optical transmission terminal station is determined in terms of the mean value of the gains of all the repeaters during most of the lapse of time but the gains decrease together during the rest of the lapse of time so as at reduce the S/N ratio. When a simulation in which the optical amplification repeaters A of about 0.25 dB in mean value of polarization dependency of gains and the optical fibers 9 as transmission lines were connected together was made in the experiment, it was found out that the S/N ratio of the optical signal received by the terminal station sometimes deteriorates by several decibels.

On the basis of the results of the studies and the experiment, computerized simulations were made in order to determine such a necessary value for the polarization dependency of the gains of all the repeaters as to reduce the fluctuation in the S/N ratio of the optical signal received by the optical transmission terminal station of the optical amplification repeating transmission system, to achieve a stable transmitting property for the system. As a result, it was found out that to attain that purpose, the mean value of the widths of the fluctuations in the gains of all the repeaters, which are due to the dependence of the gains on the state of polarization of the optical signal to the repeaters, should be set a 0.2 dB or less.

### SUMMARY OF THE INVENTION

The present invention was made in order to solve the above mentioned problem. Accordingly, it is an object of the invention to provide such an optical amplification repeating transmission system that the fluctuation in the S/N ratio of an optical signal transmitted in the system is minimized for a long time, and the system meets the above-mentioned world standard.

According to the invention there is provided an optical amplification repeating transmission system according to the accompanying Claim 1.

In the system, the fluctuation in the S/N ratio of the optical signal with the lapse of time is minimized. In other words, the signal transmitting property of the system is kept stable for a long time. Besides, the system meets the world standard.

### BRIEF DESCRIPTION OF THE DRAWINGS

FIG. 1 is a block diagram of an optical amplification repeating transmission system which is an embodiment of the present invention;
FIG. 2 is a graph showing the measured S/N ratio of an optical signal received by the optical transmission terminal station of the system;
FIG. 3 is a graph showing the dependence of the loss of an optical signal in the optical component of a conventional optical amplification repeater on the state of polarization of the signal;
FIG. 4 is a graph showing the amplification gain of the erbium-doped fiber of the repeater;
FIG. 5 is a block diagram to illustrate a process in which the noise components of optical signals are gradually increased through two pairs of the repeaters and optical fibers connected as transmission lines thereto;
FIG. 6 is a graph showing the dependence of the optical component of the system on the state of polarization of the optical signal;
FIG. 7 is graphs to illustrate the concept of an optical amplification repeating transmission system which is another embodiment of the invention;
FIG. 8 is a block diagram of the optical amplification repeater of a conventional optical amplification repeating transmission system; and
FIG. 9 is a graph showing the measured S/N ratio of an optical signal received by the optical transmission terminal station of the conventional system in the case that a large number of conventional optical amplification repeaters were actually provided between optical transmission lines.

### DETAILED DESCRIPTION OF THE PREFERRED EMBODIMENTS

Embodiments of the present invention are hereafter described in detail with reference to the drawings.

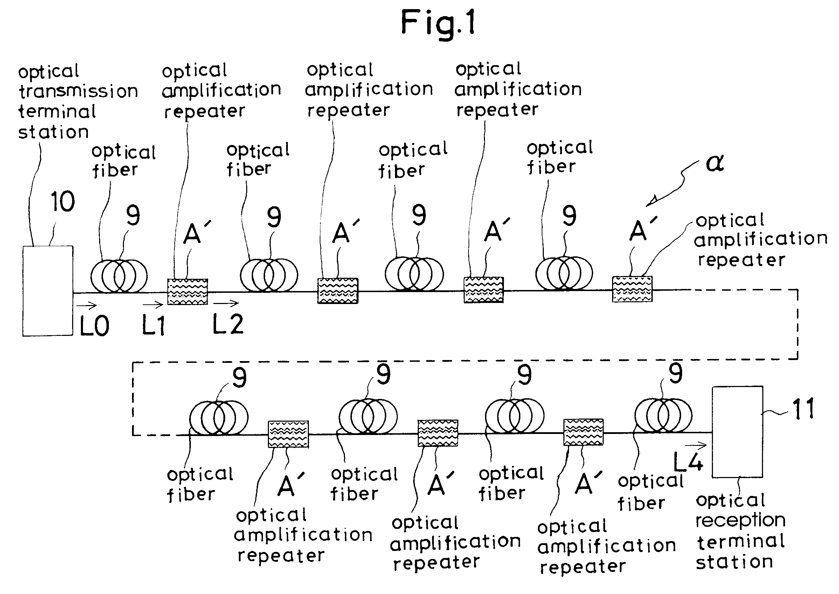

FIG. 1 shows an optical amplification repeating transmission system α which is one of the embodiments. The system was actually built so that it included 138 optical amplification repeaters A' low in the dependence of the gains thereof on the state of polarization of an input optical signal to the repeaters and disposed between optical fibers 9 as transmission lines each having a length of about 33 km, an optical transmission terminal station 10 and an optical reception terminal station 11, and was about 4,500 km in total length. Shown at L0 and L4 in FIG. 1 are an optical signal sent out from the station 10 and having almost no distortion or noise, and an optical signal received by the other terminal station 11, respectively. Shown at L1 and L2 in FIG. 1 are the input optical signal to the repeater A' and the output optical signal therefrom, respectively. The mean value of the widths of the fluctuations in the gains of all the repeaters A', which were due to the dependence of the gains on the state of polarization of the optical signal to the repeaters, were limited to 0.2 dB or less, specifically to 0.19 dB.

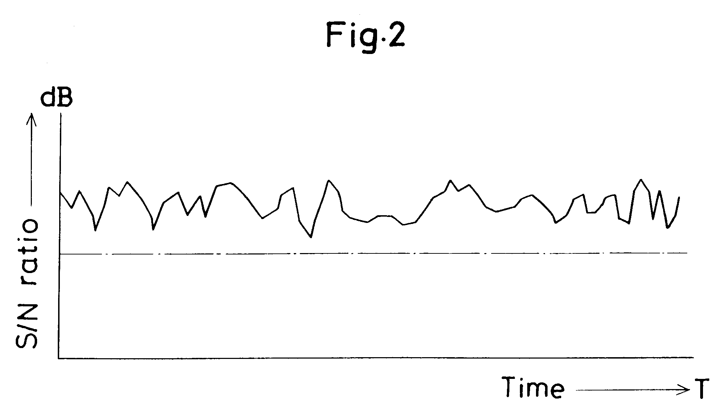

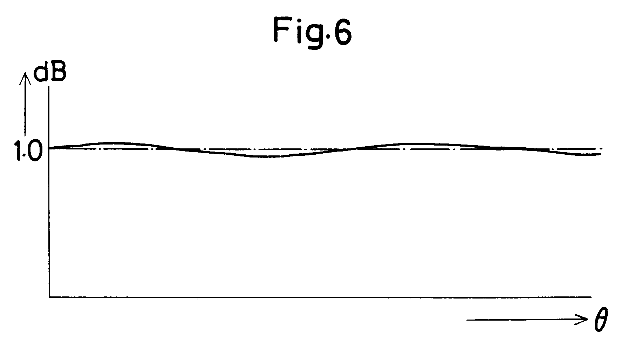

FIG. 6 shows the low dependence of each of the W.D.M. fiber coupler 2, isolator 3, optical filter 4 and output fiber coupler 5 of each of the repeaters A' on the state of polarization of the optical signal thereto. The dependence of each of the optical components 2, 3, 4 and 5 was so low that the width of the fluctuation in the gain of the repeater A' due to the polarization dependence was about 0.1 dB. Since the components 2, 3, 4 and 5 low in the dependence were used, the measured S/N ratio of the optical signal received by the terminal station 11 was as shown in FIG. 2 and the width of the fluctuation in the ratio was much smaller than 2 dB. When the bit error ratio in the system was measured at a transmission speed of 5 Gbits/sec., no bit error was detected for a long time. Therefore, it was confirmed that the system meets the world standard mentioned above. Besides, a computerized simulation proved that an optical amplification repeating transmission system which includes 303 optical amplification repeaters connected between optical fibers as transmission lines each having a length of about 33 km, and is about 10,000 km in total length can be provided in accordance with the present invention.

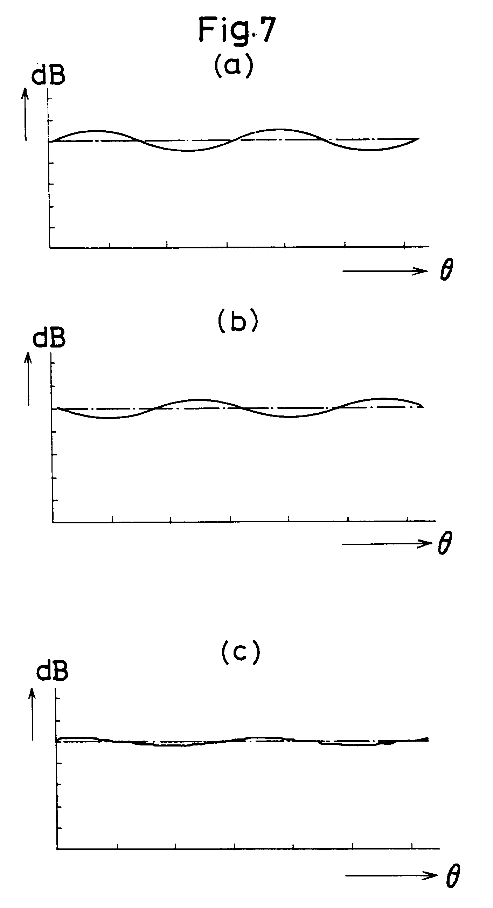

Although the polarization dependence of each of the optical components 2, 3, 4 and 5 of each of the repeaters A' was made low enough to limit the mean value of the polarization dependence of all the repeaters to 0.2 dB or less in the preceding embodiment, the present invention may be otherwise embodied as described from now on. The polarization dependence of each of the optical components 2, 3 4 and 5 of the conventional repeater A is high as shown in FIG. 3. If the isolator 3 of the conventional repeater A has a polarization dependence shown in FIG. 7(a) and the optical filter 4 of the repeater has a polarization dependence shown in FIG. 7(b), the isolator and the filter can be combined together to form an optical amplification repeater low in polarization dependence as shown in FIG. 7(c). Such repeaters low in polarization dependence can be connected together to form an optical amplification repeating transmission system which is another of the embodiments.

## Claims

1. An optical amplification repeating transmission system (α) comprising:
a plurality of optical fibers (9) laid in series for constituting a transmission line of an optical signal transmitted from an optical transmission terminal station (10) to an optical reception terminal station (11); and
a plurality of optical amplification repeaters (A') disposed between each of said optical fibers (9) for amplifying an input optical signal (L1) introduced from the preceding connected optical fiber (9), without converting said input optical signal (L1) into an electric signal, so as to transmit an output optical signal (L2) to the following connected optical fiber (9),
wherein each of said optical amplification repeaters (A') includes:
an erbium-doped fiber (1) for amplifying said input optical signal (L1) by means of a laser light which is capable of exciting erbium therein, the dependence of the amplification gain of said erbium-doped fiber (1) on the state of polarization of the optical signal therethrough being negligible;
a pump laser device (6) for emitting said laser light;
a wavelength division multiplexing fiber coupler (2) for introducing said laser light into said erbium-doped fiber (1) so as to output an amplified optical signal (L2'), said wavelength division multiplexing fiber coupler (2) having a passing loss which is dependent upon the state of polarization of the optical signal therethrough;
an isolator (3) for eliminating a reflected light of said amplified optical signal (L2'), said isolator (3) having a passing loss which is dependent upon the state of polarization of the optical signal therethrough;
an optical filter (4) for eliminating an unnecessary constituent light of said amplified optical signal (L2'), said optical filter (4) having a passing loss which is dependent upon the state of polarization of the optical signal therethrough; and
an output fiber coupler (5) for dividing said amplified optical signal (L2') into said output optical signal (L2) and a monitoring optical signal (L3) sent back to said optical transmission terminal station (1), said output fiber coupler (5) having a passing loss which is dependent upon the state of polarization of the optical signal therethrough.
characterized in that the gain fluctuation in each of said optical amplification repeaters (A'), which is due to the polarization dependence of each of said passing losses of said wavelength division multiplexing fiber coupler (2), said isolator (3), said optical filter (4) and said output fiber coupler (5) therein, is set to a positive value of up to + 0.2 dB at most.

## Patentansprüche

1. Übertragungssystem mit optischen Zwischenverstärkern (α) mit:
einer Vielzahl von optischen Fasern (9), die zur Bildung einer Übertragungsleitung eines optischen Signals in Reihe gelegt sind, das von einer optischen Sendeendstelle (10) an eine optische Empfangsendstelle (11) übertragen wird; und
einer Vielzahl von optischen Zwischenverstärkern (A'), die zwischen jeder der optischen Fasern (9) zur Verstärkung eines optischen Eingangssignals (L1) angeordnet sind, das von der vorhergehenden verbundenen optischen Faser (9) eingeführt wird, ohne das optische Eingangssignal (L1) in ein elektrisches Signal umzuwandeln, um ein optisches Ausgangssignal (L2) an die folgende verbundene optische Faser (9) zu übertragen,
wobei jeder der optischen Zwischenverstärker (A') aufweist:
eine erbiumdotierte Faser (1) zur Verstärkung des optischen Eingangssignals (L1) mittels eines Laserlichts, das in der Lage ist, Erbium darin anzuregen, wobei die Abhängigkeit der Verstärkung der erbiumdotierten Faser (1) vom Zustand der Polarisation des durch diese laufenden optischen Signals vernachlässigbar ist;
eine Pumplaservorrichtung (6) zum Emittieren des Laserlichts;
einen Wellenlängenmultiplexfaserkoppler (2) zum Einführen des Laserlichts in die erbiumdotierte Faser (1), um ein verstärktes optisches Signal (L2') auszugeben, wobei der Wellenlängenmultiplexfaserkoppler (2) einen Durchlaßverlust aufweist, der vom Zustand der Polarisation des durch diesen laufenden optischen Signals abhängig ist;
eine Richtungsleitung (3) zum Eliminieren eines reflektierten Lichts des verstärkten optischen Signals (L2'), wobei die Richtungsleitung (3) einen Durchlaßverlust aufweist, der vom Zustand der Polarisation des durch diese laufenden optischen Signals abhängig ist;
ein optisches Filter (4) zur Eliminierung einer unnötigen Lichtkonstituente des verstärkten optischen Signals (L2'), wobei das optische Filter (4) einen Durchlaßverlust aufweist, der vom Zustand der Polarisation des durch dieses laufenden optischen Signals abhängig ist; und
einen Ausgangsfaserkoppler (5) zum Teilen des verstärkten optischen Signals (L2') in das optische Ausgangssignal (L2) und ein optisches Überwachungssignal (L3), das an die optische Sendeendstelle (1) zurückgesendet wird, wobei der Ausgangsfaserkoppler (5) einen Durchlaßverlust aufweist, der vom Zustand der Polarisation des durch diesen laufenden optischen Signals abhängig ist,
dadurch gekennzeichnet, daß die Verstärkungsschwankung in jedem der optischen Zwischenverstärker (A'), die auf die Polarisationsabhängigkeit jedes der Durchlaßverluste des Wellenlängenmultiplexfaserkopplers (2), der Richtungsleitung (3), des optischen Filters (4) und des Ausgangsfaserkopplers (5) darin zurückzuführen ist, höchstens auf einen positiven Wert von bis zu +0,2 dB gesetzt ist.

## Revendications

1. Système de transmission avec répéteurs à amplification optique (α) comprenant:
une pluralité de fibres optiques (9) étendues en série pour constituer une ligne de transmission d'un signal optique transmis depuis une station terminale d'émission optique (10) jusqu'à une station terminale de réception optique (11); et
une pluralité de répéteurs à amplification optique (A') disposés entre chacune desdites fibres optiques (9) pour amplifier un signal optique d'entrée (L1) introduit depuis la fibre optique connectée précédente (9) sans convertir ledit signal optique d'entrée (L1) selon un signal électrique de manière à transmettre un signal optique de sortie (L2) sur la fibre optique connectée suivante (9),
dans lequel chacun desdits répéteurs à amplification optique (A') inclut:
une fibre dopée à l'erbium (1) pour amplifier ledit signal optique d'entrée (L1) au moyen d'une lumière laser qui a la capacité d'exciter l'erbium dedans, la dépendance du gain d'amplification de ladite fibre dopée à l'erbium (1) vis-à-vis de l'état de polarisation du signal optique au travers étant négligeable;
un dispositif laser de pompage (6) pour émettre ladite lumière laser;
un coupleur de fibre à multiplexage par division en longueurs d'onde (2) pour introduire ladite lumière laser dans ladite fibre dopée à l'erbium (1) de manière à émettre en sortie un signal optique amplifié (L2'), ledit coupleur de fibre à multiplexage par division en longueurs d'onde (2) présentant une perte de passage qui dépend de l'état de polarisation du signal optique au travers;
un isolateur (3) pour éliminer une lumière réfléchie dudit signal optique amplifié (L2'), ledit isolateur (3) présentant une perte de passage qui dépend de l'état de polarisation du signal optique au travers;
un filtre optique (4) pour éliminer une lumière constitutive non nécessaire dudit signal optique amplifié (L2'), ledit filtre optique (4) présentant une perte de passage qui dépend de l'état de polarisation du signal optique au travers; et
un coupleur de fibre de sortie (5) pour diviser ledit signal optique amplifié (L2') selon ledit signal optique de sortie (L2) et un signal optique de surveillance (L3) envoyé en retour sur ladite station terminale d'émission optique (1), ledit coupleur de fibre de sortie (5) présentant une perte de passage qui dépend de l'état de polarisation du signal optique au travers,
caractérisé en ce que la fluctuation de gain dans chacun desdits répéteurs à amplification optique (A'), laquelle est due à la dépendance vis-à-vis de la polarisation de chacune desdites pertes de passage dudit coupleur de fibre à multiplexage par division en longueurs d'onde (2), dudit isolateur (3), dudit filtre optique (4) et dudit coupleur de fibre de sortie (5) dedans, est établie à une valeur positive de jusqu'à + 0,2 dB au plus.
